# EUROPÄISCHE PATENTSCHRIFT

(11) **EP 1 616 732 B1**
(45) Veröffentlichungstag und Bekanntmachung des Hinweises auf die Patenterteilung: **23.01.2008**
(21) Anmeldenummer: 04291836.7
(22) Anmeldetag: 16.07.2004
(51) Int. Cl.: B60H 1/00

(54) **Vorrichtung und Verfahren zur Regelung eines Luftvolumens in einer Kraftfahrzeug-Klimaanlage**
Device and method for controlling the air flow in a vehicle air conditioning system
Système et procédé pour contrôler le flux d'air dans une climatisation d'un véhicule

(43) Veröffentlichungstag der Anmeldung: 18.01.2006
(73) Patentinhaber: Behr France Rouffach SAS, 68250 Rouffach (FR)
(72) Erfinder: Schlachter, Claude, 6840 Wolschwiller (FR); Martin, Pascal, 68320 Fortschwihr (FR); Mehul, Xavier, 67560 Rosheim (FR)
(74) Vertreter: Grauel, Andreas

(56) Entgegenhaltungen:
- EP-A- 0 968 858
- EP-B- 0 497 639
- US-A- 4 462 217
- PATENT ABSTRACTS OF JAPAN Bd. 0092, Nr. 19 (M-410), 6. September 1985 (1985-09-06) -& JP 60 078815 A (NIPPON DENSO KK), 4. Mai 1985 (1985-05-04)

## Beschreibung

Die Erfindung betrifft eine Vorrichtung zur Regelung eines Luftvolumenstroms in einer Kraftfahrzeug-Klimaanlage gemäß dem Oberbegriff des Anspruchs 1.

Bei Kraftfahrzeug-Klimaanlagen treten in Hinblick auf den Stromverbrauch insbesondere bei hohen Geschwindigkeiten und offenem Fenster und/oder bei offenem Dach Probleme auf, da sich unter diesen Bedingungen im Fahrzeuginnenraum in der Regel ein Unterdruck ausbildet, wodurch das Gebläse der Klimaanlage in Folge des Überdrucks im Lufteintritt und dem Unterdruck im Fahrzeuginnenraum und die hieraus resultierende deutlich vergrößerte Luftmenge überlastet wird. Diese Überlastung ist verbunden mit einem größeren Stromverbrauch, der bis zu einem Verbrennen des Motors führen kann.

Das Dokument EP 497 639 B1 zeigt eine Vorrichtung zur Klimatisierung eines Fahrgastraums eines Kraftfahrzeugs mit einem Mechanismus zur Einstellung der Luftdurchsatzmengenleistung in Abhängigkeit von der Geschwindigkeit des Fahrzeugs.

Zum Schutz vor einer Überlastung sind Gebläseregler bekannt, welche den Strom begrenzen. Diese Gebläseregler sind jedoch relativ teuer.

Ferner ist eine Staudruck-Regelung bekannt, die jedoch auch relativ teuer ist.

Es ist daher Aufgabe der Erfindung, eine möglichst kostengünstige Vorrichtung zur Regelung eines Luftvolumenstroms in einer Kraftfahrzeug-Klimaanlage zur Verfügung zu stellen, welche den Gebläse-Motor vor einer Überlastung schützt.

Diese Aufgabe wird gelöst durch eine Vorrichtung mit den Merkmalen des Anspruchs 1. Vorteilhafte Ausgestaltungen sind Gegenstand der Unteransprüche.

Erfindungsgemäß ist eine Vorrichtung zur Regelung eines Luftvolumenstroms in einer Kraftfahrzeug-Klimaanlage vorgesehen, die ein Luftführungsgehäuse mit mindestens einem Luftkanal zur Frischluftzufuhr und mindestens einem Luftkanal für den Umluftbetrieb aufweist, die zusammengeführt werden und einen gemeinsamen Luftkanal bilden, wobei mindestens eine gemeinsame Klappe zur Regelung einer Öffnung des Luftkanals zur Frischluftzufuhr und zur Regelung einer Öffnung des Luftkanals für den Umluftbetrieb vorgesehen ist, die eine Vorrichtung zur Reduzierung des Luftvolumenstroms aufweist, welche sicherstellt, dass der Gebläse-Motor nicht durch einen zu großen Luftdurchtritt und einer damit verbundenen zu großen Drehzahl überlastet wird. Die Klappe ist Teil der Vorrichtung zur Reduzierung des Luftvolumenstroms. Dabei erfolgt eine Regelung der Klappe derart, dass bei einer möglichen Überlastung des Gebläse-Motors eine automatische Umschaltung von Frischluftbetrieb, gegebenenfalls auch von einem Mischbetrieb, auf Umluftbetrieb erfolgt, so dass der Überdruck am Lufteintritt das Gebläse nicht belastet.

Bevorzugt ist eine Klappe zur Verkleinerung des Querschnitts des gemeinsamen Luftkanals vorgesehen, welche bevorzugt getrennt von der oder den anderen Klappen ausgebildet ist. Dabei ist die Klappe bevorzugt automatisch auf mechanische Weise geregelt, das heißt, es ist bevorzugt keine Elektronik zur Regelung der Klappe vorgesehen. Bei einander entsprechender Ausgestaltung des Luftführungsgehäuses können die gleichen Bauteile verwendet werden. Eine Anpassung der Klimaanlagen-Steuerung, insbesondere auch eine Verkabelung der Klappe bzw. deren Stellvorrichtung mit der Steuerung entfällt mangels Elektronik. Dadurch können die Herstellungskosten gesenkt werden. Die Klappe kann auch eine geregelte Stellvorrichtung aufweisen.

Die Klappe ist vorzugsweise in Luftströmungsrichtung gesehen vor dem Gebläse, insbesondere direkt am Gebläseeintritt, angeordnet, in einem Bereich, in dem der Luftkanal zur Frischluftzufuhr und der Luftkanal für den Umluftbetrieb zusammengeführt sind und den gemeinsamen Luftkanal bilden.

Die Klappe weist eine Feder auf, welche die Regelung der Klappenstellung in Abhängigkeit der Luftströmungsgeschwindigkeit, die in Zusammenhang mit der Druckdifferenz zwischen dem Lufteintritt und dem Bereich nach dem Gebläse steht, übernimmt. Eine Feder ermöglicht eine einfache, kostengünstige und von elektrischer Energie unabhängige Regelung.

Bevorzugt verdeckt die Klappe im maximal ausgelenkten Zustand etwa die Hälfte des Querschnitts des gemeinsamen Luftkanals, wodurch der Luftvolumenstrom, der den gemeinsamen Luftkanal und das nachfolgende Gebläse durchströmt, verringert wird und dadurch das Gebläse vor einer Überlastung geschützt wird.

Der Luftkanal für die Frischluftzufuhr ist vorzugsweise senkrecht oder annähernd senkrecht zur Klappe angeordnet ist, wenn sich die Klappe im maximal ausgelenkten Zustand, das heißt in der "ZU"-Stellung, befindet.

Bevorzugt schwenkt die Klappe um einen Winkel von maximal weniger als 90°. Ein derartiger Winkelbereich lässt sich einfach und kostengünstig durch eine Feder mit einem sinnvollen Verhältnis von "Winkel der Auslenkung der Klappe" zur "Kraft für die Auslenkung" realisieren.

Die Klappe ist vorzugsweise im Ruhezustand in einem Winkel größer als 0° zur Wandung des gemeinsamen Luftkanals angeordnet. Dabei öffnet sich der bevorzugt etwa keilförmige Spalt entgegen der Luftströmungsrichtung.

In allen Ausführungsformen mit einer geregelten Stellvorrichtung ist bevorzugt mindestens ein Sensor vorgesehen, der Messwerte ermittelt, die in Zusammenhang mit dem im Gebläse-Motor strömenden Strom stehen, so dass der Gebläse-Motor vor einer Überlastung geschützt werden kann. Als Messwerte kommen insbesondere die Fahrgeschwindigkeit, die Fensterstellung/Hardtopposition, der Luftvolumenstrom, die Strömungsgeschwindigkeit der Luft vor oder direkt nach dem Gebläse, der Luftdruck im Lufteintritt, die Gebläse-Motor-Drehzahl und/oder die Gebläse-Motor-Temperatur in Frage.

Eine derartige Vorrichtung wird vorzugsweise in einer Kraftfahrzeug-Klimaanlage, insbesondere in einem Cabrio, verwendet, in dem es häufig zu extremen Druckdifferenzen zwischen dem Lufteintritt und dem Bereich nach dem Gebläse kommt.

Im Folgenden wird die Erfindung anhand mehrerer Ausführungsbeispiele unter Bezugnahme auf die Zeichnung im Einzelnen erläutert. In der Zeichnung zeigen:
- Fig. 1: eine schematische Darstellung einer erfindungsgemäßen Vorrichtung gemäß dem ersten Ausführungsbeispiel im Normalbetrieb,
- Fig. 2: eine schematische Darstellung der Vorrichtung von Fig. 1 bei einem Unterdruck nach dem Gebläse und einem Überdruck im Lufteintritt,
- Fig. 3: eine schematische Darstellung der Vorrichtung von Fig. 1 im Umluftbetrieb, bei einem Unterdruck nach dem Gebläse und einem Überdruck im Lufteintritt,
- Fig. 4: eine schematische Darstellung der Vorrichtung von Fig. 1 in einem Mischbetrieb Frischluft-Umluft, bei einem Unterdruck nach dem Gebläse und einem Überdruck im Lufteintritt,
- Fig.5: eine erste Variante des ersten Ausführungsbeispiels im Normalbetrieb,
- Fig. 6: die erste Variante des ersten Ausführungsbeispiels bei geschlossener Vorrichtung zur Reduzierung des Luftvolumen-stroms,
- Fig.7: eine zweite Variante des ersten Ausführungsbeispiels im Normalbetrieb,
- Fig. 8: die zweite Variante des ersten Ausführungsbeispiels bei geschlossener Vorrichtung zur Reduzierung des Luftvolumen-stroms,
- Fig. 9: eine schematische Darstellung einer erfindungsgemäßen Vorrichtung gemäß dem zweiten Ausführungsbeispiel im Normal-betrieb, und
- Fig. 10: das zweite Ausführungsbeispiel von Fig. 9 bei geschlossener Vorrichtung zur Reduzierung des Luftvolumenstroms, und
- Fig. 11: eine schematische Darstellung einer erfindungsgemäßen Vorrichtung gemäß dem ersten Ausführungsbeispiel mit einer Trommelklappe.

Eine Kraftfahrzeug-Klimaanlage 1 weist in einem Luftführungsgehäuse 2 mit einer Mehrzahl von Luftkanälen, unter denen ein Luftkanal 3 zur Frischluftzufuhr und ein Luftkanal 4 für den Umluftbetrieb ist, ein Gebläse 5 mit einem von einem Gebläse-Motor 6 angetriebenem Lüfterrad 7, ein dem Gebläse 5 nachgeordneten Verdampfer 8 und Heizer (nicht dargestellt) auf. Der Luftvolumenstrom ist in der Zeichnung durch Pfeile dargestellt.

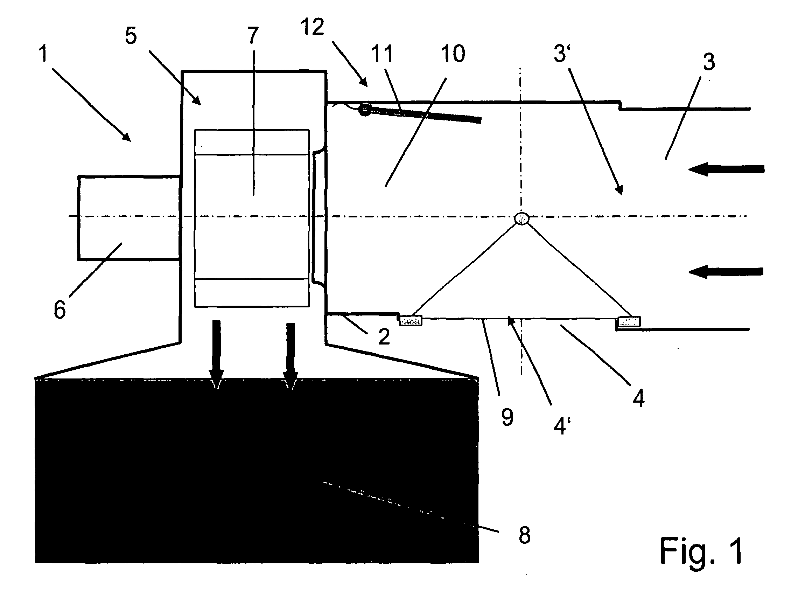

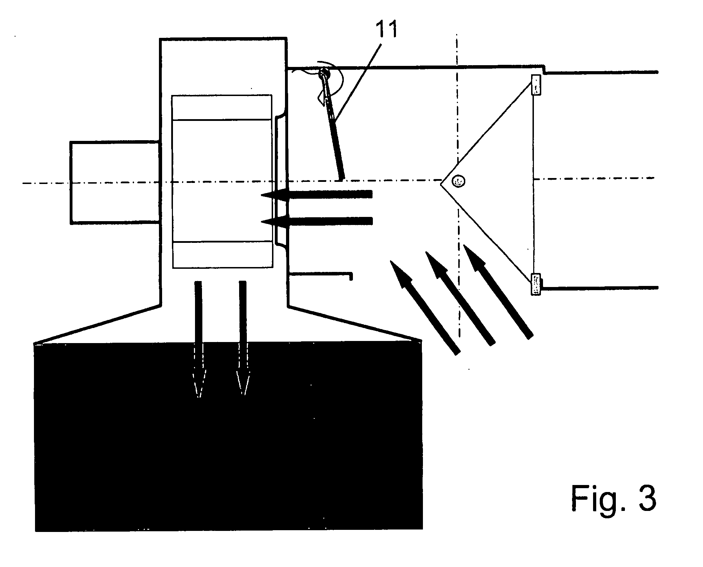

Die Regelung des Luftvolumenstroms in Hinblick auf den Frischluft-Umluftbetrieb erfolgt mit Hilfe einer Klappe 9, welche bei geschlossenem Luftkanal 4 für den Umluftbetrieb die entsprechende Öffnung 4' vollständig verschließt, wie in Fig. 1 dargestellt. Bei geschlossenem Luftkanal 3 zur Frischluftzufuhr verschließt die Klappe 9 die entsprechende Öffnung 3' vollständig, wie in Fig. 3 dargestellt. Die beiden Luftkanäle 3 und 4 sind im Anschluss an die Klappe 9 zusammengeführt und bilden einen gemeinsamen Luftkanal 10, welcher direkt zum Gebläse 5 führt. Die Verschwenkachse der Klappe 9 ist im Wesentlichen mittig bezüglich der Luftkanäle 3 und/oder 10 angeordnet.

Im gemeinsamen Luftkanal 10 ist eine federbetätigte Klappe 11 angeordnet, die als eine Vorrichtung 12 zur Reduzierung des Luftvolumenstroms dient und den Gebläse-Motor 6 bei extrem großen Druckdifferenzen zwischen Lufteintritt und dem Bereich nach dem Gebläse 5, vor Überlastung in Folge eines zu großen Stromdurchflusses schützt, beispielsweise bei sehr schnellem Fahren mit geöffnetem Fenster, was verbunden ist mit einem Unterdruck im Fahrzeuginnenraum und einem Überdruck im Lufteintritt.

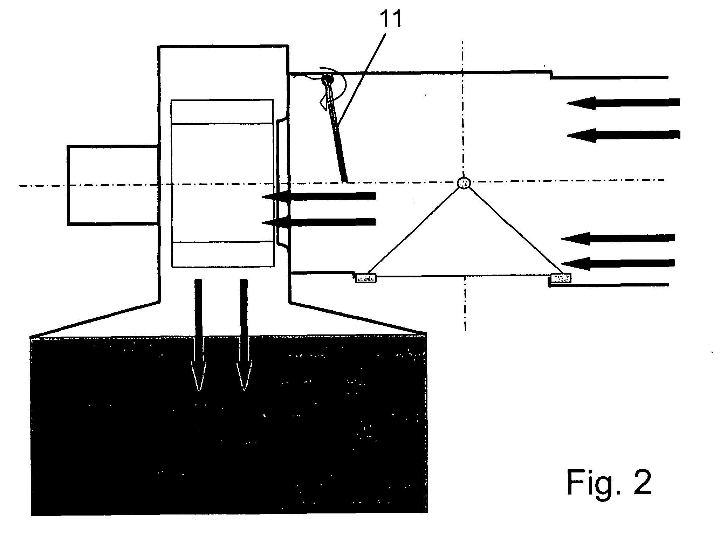

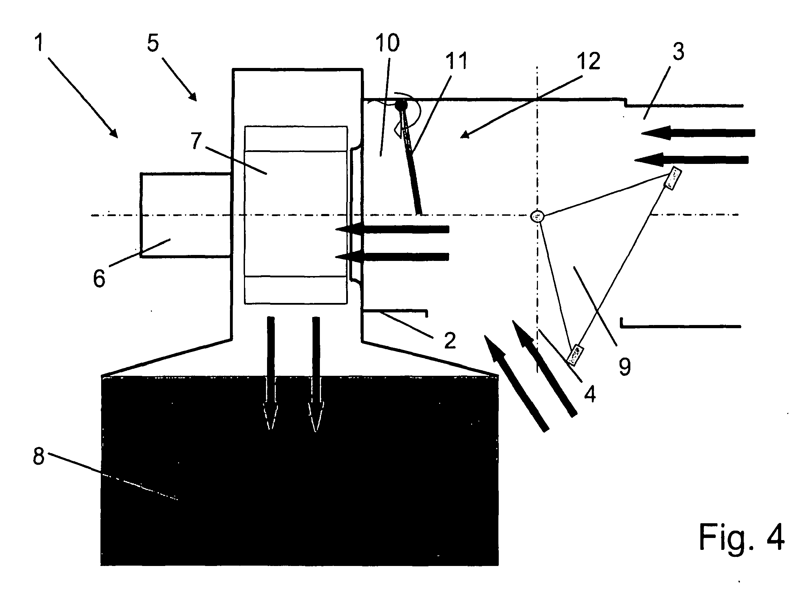

Die Klappe 11 verdeckt in ihrem vollständig ausgelenkten Zustand, das heißt der "ZU"-Stellung, gemäß dem vorliegenden Ausführungsbeispiel etwa die Hälfte des gemeinsamen Luftkanals 10, wie in den Figuren 2 bis 4 dargestellt. Dabei ist die Klappe 11 um annähernd 90° gegenüber ihrer anderen Endstellung, das heißt der "AUF"-Stellung, geschwenkt. Allerdings ist die Klappe 11 in ihrer "ZU"-Stellung nicht, sondern nur annähernd senkrecht zur Mittellängsachse des gemeinsamen Luftkanals 10 angeordnet.

Um eine automatische Auslenkung zu gewährleisten, liegt die Klappe 11 nicht vollständig an der Wandung des gemeinsamen Luftkanals 10 an, sondern es ist ein schmaler, keilförmiger Spalt zwischen der Wandung des Luftkanals 10 und der Klappe 11 vorgesehen. In diesen Spalt dringt bei erhöhten Strömungsgeschwindigkeiten der Luft im Luftkanal 10 in Folge der Druckdifferenz bei einem Überdruck im Lufteintritt und einem Unterdruck nach dem Gebläse 5 Luft, der Luftdruck hinter der Klappe 11 erhöht sich, während der Luftdruck auf der anderen Seite in Folge der hohen Strömungsgeschwindigkeit der Luft sinkt, so dass die Klappe 11 entgegen der Federkraft ausgelenkt wird. Sinkt wiederum die Druckdifferenz zwischen Lufteintritt und nach dem Gebläse 5, so öffnet die Klappe 11 durch die Federkraft wieder.

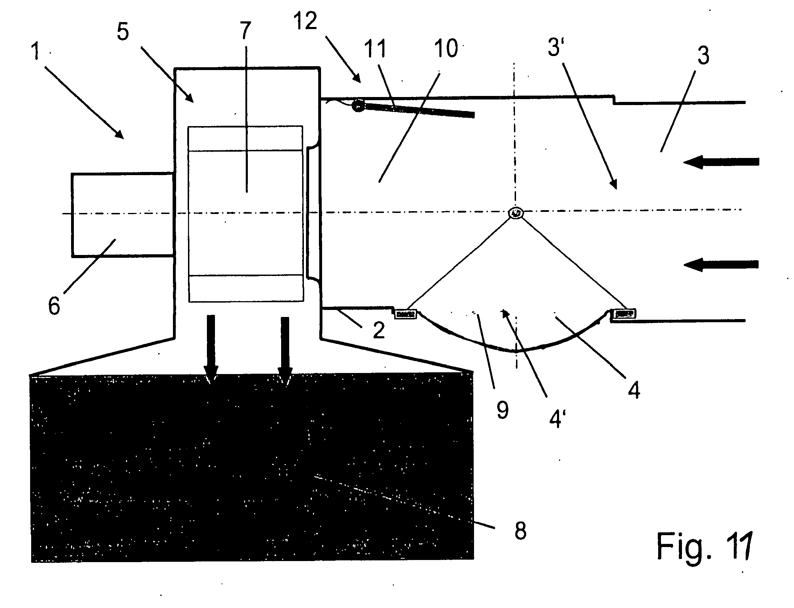

In einer vorteilhaften, in Fig. 11 dargestellten Variante, ist die Klappe 9 als Trommelklappe ausgeführt, wobei die Klappenwandung, welche die Öffnungen 4' und/oder 3' wahlweise verschließt und öffnet im Wesentlichen zylindrisch ausgebildet ist. Insbesondere ist diese nach außen gekrümmt, so dass in Zwischenstellungen der Klappe ein direkter Luftstrom vom Luftkanal 3 in den Luftkanal 4 verhindert oder zumindest reduziert wird.

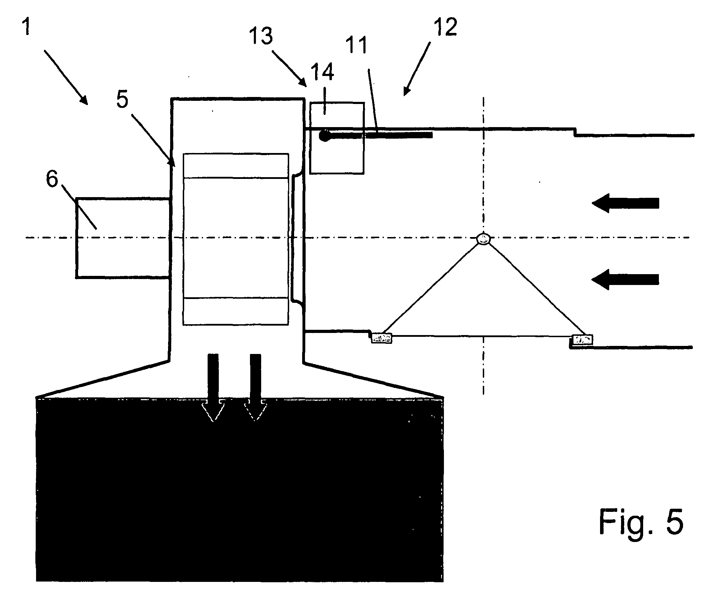

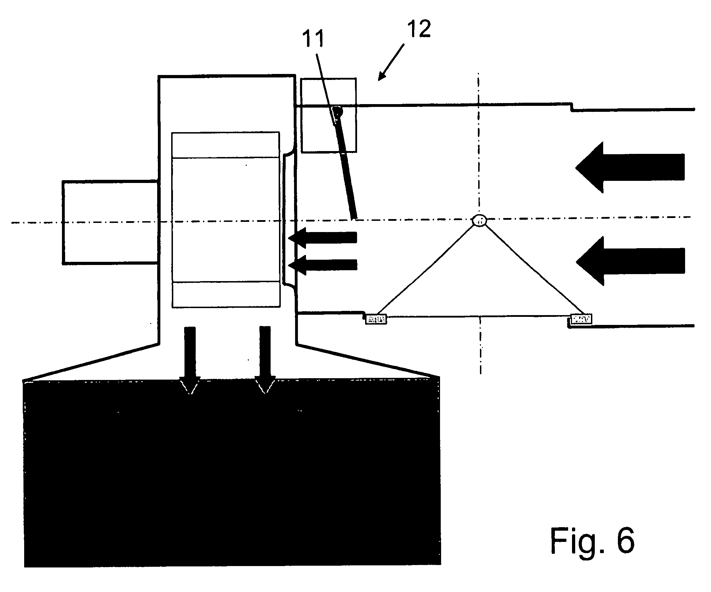

Im Folgenden wird eine weitere Variante des soeben beschriebenen ersten Ausführungsbeispiels unter Bezugnahme auf die Figuren 5 und 6 näher erläutert. Der Aufbau entspricht, sofern nachfolgend nicht anders beschrieben, dem des ersten Ausführungsbeispiels, und gleiche und gleichwirkende Elemente sind mit den gleichen Bezugszeichen versehen.

Gemäß der ersten Variante des ersten Ausführungsbeispiels ist zum Stellen der Klappe 11 anstelle der Feder als eine geregelte Stellvorrichtung 13 ein Stellmotor 14 vorgesehen, der im Prinzip die Funktion der Feder des ersten Ausführungsbeispiels übernimmt. Allerdings erfolgt eine Stellbewegung der geregelten Stellvorrichtung 13 in Abhängigkeit von mittels Sensoren (nicht dargestellt) ermittelten Messwerten, die von einer Auswerteeinheit (nicht dargestellt), welche vorliegenden in das Steuergerät der Klimaanlage integriert ist, ausgewertet werden. Das Steuergerät gibt im Bedarfsfall ein Stellsignal an die Stellvorrichtung 13 und diese bewegt die Klappe 11 in die gewünschte Stellung.

Da die Klappe 11 zur Regelung und insbesondere zur Begrenzung des Luftvolumenstroms dient, welcher das Gebläse 5 durchströmt, wird sie in Abhängigkeit von Messwerten geregelt, welche in Zusammenhang mit dem Luftvolumenstrom stehen.

Dabei werden vorliegend die Fahrgeschwindigkeit und die Fensterstellung/Hardtopposition für die Regelung verwendet. Bei hohen Fahrgeschwindigkeit, vorliegend bei 200km/h, und/oder mindestens einem geöffneten Fenster oder offenem Hardtop wird automatisch die Klappe 11 "geschlossen", so dass der Luftvolumenstrom deutlich verringert wird und eine Überlastung des Gebläses 5 vermieden werden kann.

Alternativ können an Stelle der Fahrgeschwindigkeit und/oder der Fensterstellung/Hardtopposition auch der Luftvolumenstrom, die Strömungsgeschwindigkeit der Luft vor oder direkt nach dem Gebläse 5, insbesondere aber im Luftkanal 3 zur Frischluftzufuhr, der Luftdruck im Lufteintritt, die Gebläse-Motor-Drehzahl und/oder die Gebläse-Motor-Temperatur ausgewertet werden. Dabei kommen Geschwindigkeits-, Druck-, Drehzahl- und/oder Temperatursensoren zum Einsatz, die an den entsprechenden Messstellen anzuordnen sind. Aus den Messwerten lässt sich der zu erwartende Strom im Gebläse-Motor 6 zumindest näherungsweise ermitteln, so dass bei einer zu erwartenden Überlastung, insbesondere bei einem Dauerbetrieb in diesem Zustand, entsprechende Maßnahmen getroffen werden können.

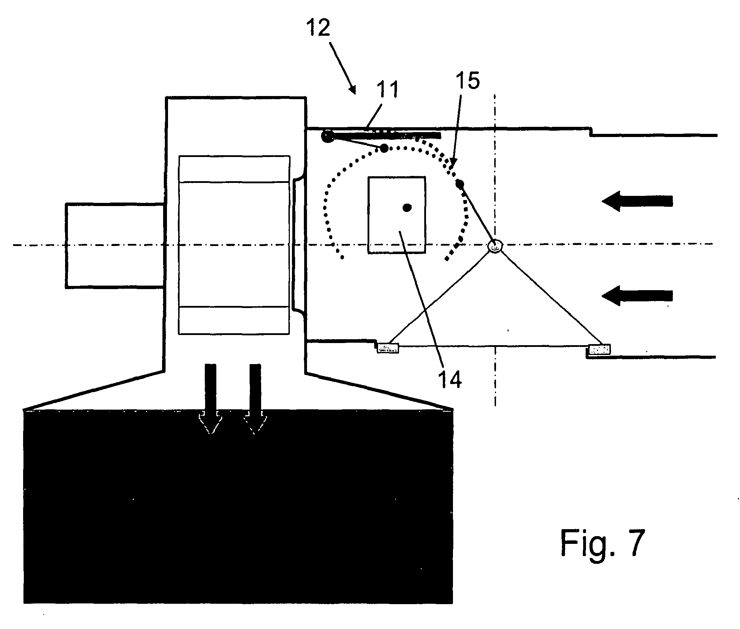

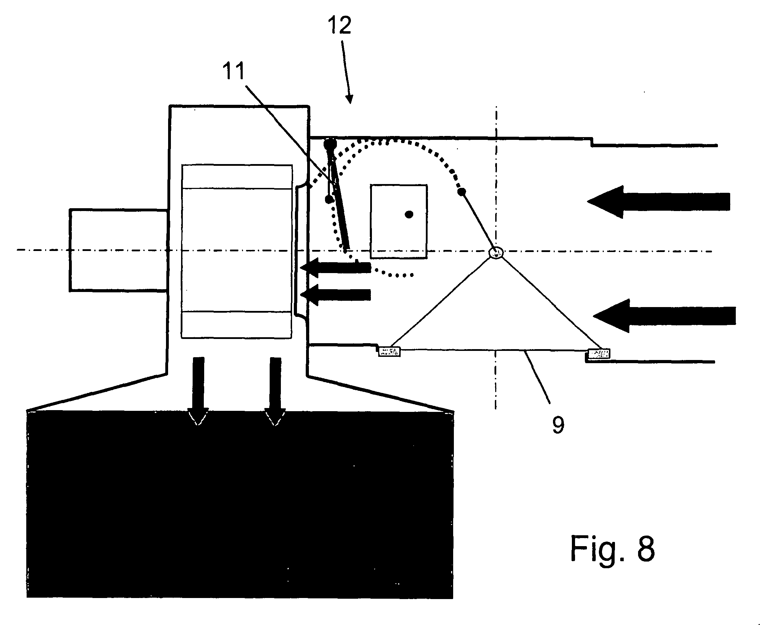

Gemäß einer zweiten Variante des ersten Ausführungsbeispiels ist ein gemeinsamer Stellmotor 14 mit einer Kurvenscheiben-Kinematik 15 für die Klappe 9 und die Klappe 11 vorgesehen, wie in den Figuren 7 und 8 dargestellt. Die Regelung erfolgt entsprechend der ersten Variante des ersten Ausführungsbeispiels. Zwar ist die Ansteuerung des Stellmotors 14 für die beiden Klappen 9 und 11 auf Grund der Doppelfunktion etwas komplizierter, jedoch entfällt ein Stellmotor, so dass diese Variante kostengünstiger als die zuvor beschriebene erste Variante des ersten Ausführungsbeispiels ist.

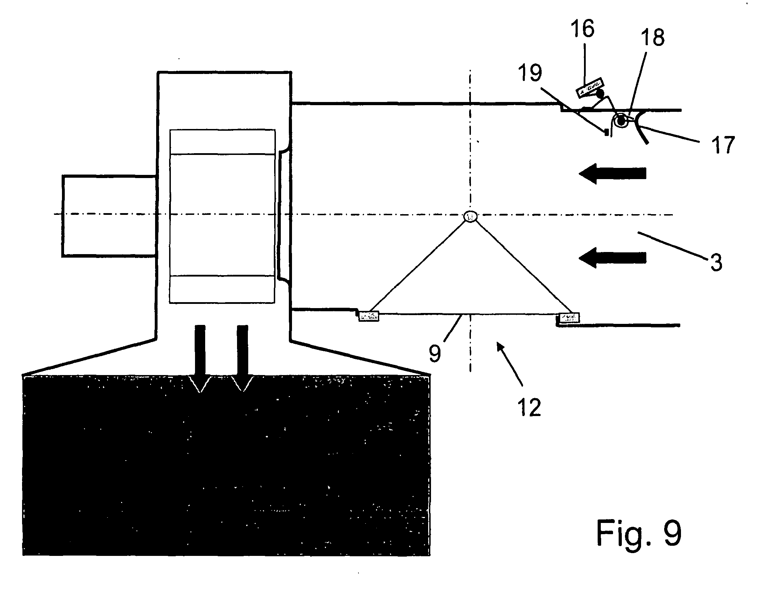

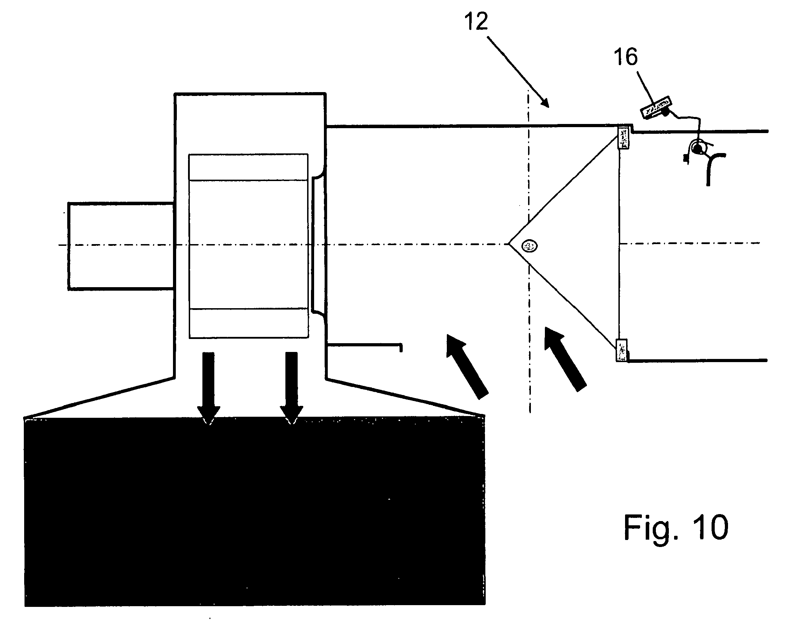

Bei dem in den Figuren 9 und 10 dargestellten zweiten Ausführungsbeispiel ist im Luftkanal 3 für die Frischluftzufuhr ein Sensor 16 (Endstellungs-Sensor) an einer Seitenwand angeordnet. Der Sensor 16 ist mit einer Schaufelklappe 17 über ein Verbindungselement in Kontakt, die im Luftkanal 3 angeordnet ist. Diese Schaufelklappe 17 ist mit einer Feder 18 verbunden, welche mit einem Federarm an einer Anlage 19 anliegt. Wird die Schaufelklappe 17 durch eine große Strömungsgeschwindigkeit ausgelenkt, so wird die Feder 18 gespannt. Nimmt die Strömungsgeschwindigkeit ab, so bewegt die gespannte Feder 18 die Schaufelklappe 17 wieder in Richtung ihrer Ausgangsstellung. Das mit der Schaufelklappe 17 verbundene Verbindungselement gibt die Position an den Sensor 16 weiter, welcher bei einer vollen Auslenkung ein entsprechendes Signal an den Stellmotor für die Klappt 9 weitergibt, die als Vorrichtung 12 zur Reduzierung des Luftvolumenstroms dient, welche dann, wie in Fig. 10 dargestellt, von Frischluftbetrieb auf Umluftbetrieb automatisch umschaltet. Durch den Umluftbetrieb kann eine Überlastung des Gebläses 5 sicher vermieden werden, da so nur die Druckdifferenz zwischen dem ausschließlich mit dem Innenraum verbundenen gemeinsamen Luftluftkanal 10 und dem Unterdruck nach dem Gebläse 5 und nicht die Druckdifferenz zwischen dem Überdruck im Lufteintritt und dem Unterdruck nach dem Gebläse 5 herrscht. Die Rückstellbewegung der Klappe 9 erfolgt, wenn der Sensor 16 in Folge der vollständigen Rückstellung der Schaufelklappe 17 vom Verbindungselement entsprechend freigegeben ist.

Als Parameter, die zur Ermittlung des im Gebläse-Motor 6 strömenden Stroms dienen, kommen, wie in Zusammenhang mit dem ersten Ausführungsbeispiel beschrieben, insbesondere folgende Parameter in Frage: Fahrgeschwindigkeit, Fensterstellung/Hardtopposition, Luftvolumenstrom, Strömungsgeschwindigkeit der Luft vor oder direkt nach dem Gebläse 5, Luftdruck im Lufteintritt, Gebläse-Motor-Drehzahl und/oder Gebläse-Motor-Temperatur, wobei die Aufzählung nicht abschließend ist.

Um das Gebläse 5 optimal zu schützen, kann in allen Fällen eine automatische Herabschaltung des Gebläses 5 um beispielsweise eine Stufe erfolgen. Dies kann mittels eines Relais (nicht dargestellt) geschehen, wobei das Relais in Abhängigkeit der zuvor beschriebenen Messwerte geregelt wird, insbesondere durch das Steuergerät der Klimaanlage.

### Bezugszeichenliste

- 1: Kraftfahrzeug-Klimaanlage
- 2: Luftführungsgehäuse
- 3: Luftkanal zur Frischluftzufuhr
- 3': Öffnung
- 4: Luftkanal für den Umluftbetrieb
- 4': Öffnung
- 5: Gebläse
- 6: Gebläse-Motor
- 7: Lüfterrad
- 8: Verdampfer
- 9: Klappe
- 10: gemeinsamer Luftkanal
- 11: Klappe
- 12: Vorrichtung zur Reduzierung des Luftvolumenstroms
- 13: geregelte Stellvorrichtung
- 14: Stellmotor
- 15: Kurvenscheiben-Kinematik
- 16: Sensor
- 17: Schaufelklappe
- 18: Feder
- 19: Anlage

## Patentansprüche

1. Vorrichtung zur Regelung eines Luftvolumenstroms in einer Kraftfahrzeug-Klimaanlage, die ein Luftführungsgehäuse (2) mit mindestens einem Luftkanal (3) zur Frischluftzufuhr und mindestens einem Luftkanal (4) für den Umluftbetrieb aufweist, die zusammengeführt werden und einen gemeinsamen Luftkanal (10) bilden, wobei eine Vorrichtung (12) zur Reduzierung des Luftvolumenstroms vorgesehen ist, **dadurch gekennzeichnet, dass** mindestens eine gemeinsame Klappe (9) zur Regelung einer Öffnung (3') des Luftkanals (3) zur Frischluftzufuhr und zur Regelung einer Öffnung (4') des Luftkanals (4) für den Umluftbetrieb vorgesehen ist, wobei diese Klappe (9) Teil der Vorrichtung (12) zur Reduzierung des Luftvolumenstroms ist.

2. Vorrichtung nach Anspruch 1, **dadurch gekennzeichnet, dass** die Vorrichtung zur Reduzierung des Luftvolumenstroms durch eine Klappe (9 und/oder 11) gebildet ist.

3. Vorrichtung nach Anspruch 2, **dadurch gekennzeichnet, dass** die Klappe (11) zur Verkleinerung des Querschnitts des gemeinsamen Luftkanals (10) vorgesehen ist.

4. Vorrichtung nach Anspruch 2 oder 3, **dadurch gekennzeichnet, dass** die Klappe (11) vor dem Gebläse (5) angeordnet ist.

5. Vorrichtung nach einem der Ansprüche 2 bis 4, **dadurch gekennzeichnet, dass** die Klappe (11) eine Feder aufweist.

6. Vorrichtung nach einem der Ansprüche 2 bis 5, **dadurch gekennzeichnet, dass** die Klappe (11) im maximal ausgelenkten Zustand etwa die Hälfte des Querschnitts des gemeinsamen Luftkanals (10) verdeckt.

7. Vorrichtung nach einem der Ansprüche 2 bis 6, **dadurch gekennzeichnet, dass** der Luftkanal (3) für die Frischluftzufuhr senkrecht oder annähernd senkrecht zur Klappe (11) angeordnet ist, wenn sich die Klappe (11) im maximal ausgelenkten Zustand befindet.

8. Vorrichtung nach einem der Ansprüche 2 bis 7, **dadurch gekennzeichnet, dass** die Klappe (11) um einen Winkel von maximal weniger als 90° schwenkt.

9. Vorrichtung nach einem der Ansprüche 2 bis 8, **dadurch gekennzeichnet, dass** die Klappe (11) im Ruhezustand in einem Winkel größer als 0° zur Wandung des gemeinsamen Luftkanals (10) angeordnet ist.

10. Vorrichtung nach einem der Ansprüche 2 bis 9, **dadurch gekennzeichnet, dass** die Klappe (11) eine geregelte Stellvorrichtung (13) aufweist.

11. Vorrichtung nach Anspruch 10, **dadurch gekennzeichnet, dass** die Regelung der Stellvorrichtung (13) mindestens einen Sensor (16) aufweist.

12. Vorrichtung nach Anspruch 11, **dadurch gekennzeichnet, dass** der Sensor (16) die Fahrgeschwindigkeit, die Fensterstellung/Hardtopposition, den Luftvolumenstrom, die Strömungsgeschwindigkeit der Luft vor oder direkt nach dem Gebläse (5), den Luftdruck im Lufteintritt, die Gebläse-Motor-Drehzahl und/oder die Gebläse-Motor-Temperatur überwacht und die Klappe (11) entsprechend geregelt wird.

13. Vorrichtung nach einem der vorhergehenden Ansprüche, **dadurch gekennzeichnet, dass** mindestens ein Sensor (16) vorgesehen ist, der Messwerte ermittelt, die in Zusammenhang mit dem im Gebläse-Motor (6) strömenden Strom stehen.

14. Vorrichtung nach Anspruch 13, **dadurch gekennzeichnet, dass** der Sensor (16) die Fahrgeschwindigkeit, die Fensterstellung/Hardtopposition, den Luftvolumenstrom, die Strömungsgeschwindigkeit der Luft vor oder direkt nach dem Gebläse (5), den Luftdruck im Lufteintritt, die Gebläse-Motor-Drehzahl und/oder die Gebläse-Motor-Temperatur überwacht und die Klappe (9 ) entsprechend geregelt wird.

15. Vorrichtung nach Anspruch 14, **dadurch gekennzeichnet, dass** der Sensor (16) in Verbindung mit einer Schaufelklappe (17) steht, die im Luftkanal (3) oder im gemeinsamen Luftkanal (10) angeordnet ist.

16. Kraftfahrzeug-Klimaanlage, **gekennzeichnet durch** eine Vorrichtung (12) gemäß einem der Ansprüche 1 bis 15.

17. Verfahren zur Regelung einer Kraftfahrzeug-Klimaanlage (1) mit einem Gebläse (5), wobei die Kraftfahrzeug-Klimaanlage (1) eine Vorrichtung (12) zur Regelung eines Luftvolumenstroms aufweist, die ein Luftführungsgehäuse (2) mit mindestens einem Luftkanal (3) zur Frischluftzufuhr und mindestens einem Luftkanal (4) für den Umluftbetrieb aufweist, die zusammengeführt werden und einen gemeinsamen Luftkanal (10) bilden, wobei mindestens eine gemeinsame Klappe (9) zur Regelung einer Öffnung (3') des Luftkanals (3) zur Frischluftzufuhr und zur Regelung einer Öffnung (4') des Luftkanals (4) für den Umluftbetrieb vorgesehen ist, **dadurch gekennzeichnet, dass** eine Klappe (9 und/oder 11) bei zu großem Luftvolumenstrom durch das Gebläse (5) zumindest teilweise geschlossen wird, so dass der durch das Gebläse (5) strömende Luftvolumenstrom verringert wird.

18. Verfahren nach Anspruch 17, **dadurch gekennzeichnet, dass** die Regelung in Abhängigkeit der Federkraft einer Feder, die mit der Klappe (11) verbunden ist, erfolgt.

19. Verfahren nach Anspruch 17, **dadurch gekennzeichnet, dass** die Regelung in Abhängigkeit von Sensor-Messwerten erfolgt.

20. Verfahren nach einem der Ansprüche 17 bis 19, **dadurch gekennzeichnet, dass** die Regelung eine automatische Herabstufung der Gebläseleistung umfasst, wenn der Luftvolumenstrom durch das Gebläse (5) zu groß ist.

## Claims

1. A device for controlling an air flow in a motor vehicle air conditioning system which has an air conduction housing (2) with at least one air duct (3) for supplying fresh air and at least one air duct (4) for recirculation air mode which are joined together and form a joint air duct (10), a device (12) being provided for reducing the air flow,
**characterised in that**
at least one joint damper (9) for controlling an opening (3') of the air duct (3) for supplying fresh air and for controlling an opening (4') of the air duct (4) for the recirculation air mode is provided, this damper (9) forming part of the device (12) for reducing the air flow.

2. A device in accordance with claim 1,
**characterised in that**
the device for reducing the air flow takes the form of a damper (9 and/or 11).

3. A device in accordance with claim 2,
**characterised in that**
the damper (11) is provided to decrease the cross-section of the joint air duct (10).

4. A device in accordance with claim 2 or 3,
**characterised in that**
the damper (11) is positioned upstream of the fan (5).

5. A device in accordance with one of claims 2 to 4,
**characterised in that**
the damper (11) has a spring.

6. A device in accordance with one of claims 2 to 5,
**characterised in that**
when opened to its maximum angle the damper (11) covers at least half of the cross-section of the joint air duct (10).

7. A device in accordance with one of claims 2 to 6,
**characterised in that**
the air duct (3) for supplying fresh air is positioned perpendicular or approximately perpendicular to the damper (11) when the damper (11) is opened to its maximum angle.

8. A device in accordance with one of claims 2 to 7,
**characterised in that**
the damper (11) pivots about a maximum angle of less than 90°C.

9. A device in accordance with claims 2 to 8,
**characterised in that**
in the idle position the damper (11) pivots about a maximum angle of less than 90°.

10. A device in accordance with one of claims 2 to 9,
**characterised in that**
the damper (11) has a controlled regulating device (13).

11. A device in accordance with claim 10,
**characterised in that**
the control device of the regulation device (13) has at least one sensor (16).

12. A device in accordance with claim 11,
**characterised in that**
the sensor (16) monitors the driving speed, the window position/hard top position, the air flow, the flow speed of the air upstream or immediately downstream of the fan (5), the air pressure in the air inlet, the fan/motor speed and/or the fan/motor temperature, and the damper (11) is controlled correspondingly.

13. A device in accordance with one of the preceding claims,
**characterised in that**
at least one sensor (16) is provided which detects measured values which have an influence on the current flowing in the fan motor (6).

14. A device in accordance with claim 13,
**characterised in that**
the sensor (16) monitors the driving speed, the window position/hard top position, the air flow, the flow speed of the air upstream or immediately downstream of the fan (5), the air pressure in the air inlet, the fan/motor speed and/or the fan/motor temperature, and the damper (9) is controlled correspondingly.

15. A device in accordance with claim 14,
**characterised in that**
the sensor (16) has an influence on a bucket damper (17) which is positioned in the air duct (3) or in the joint air duct (10).

16. A motor vehicle air conditioning system,
**characterised** b y
a device (12) in accordance with one of claims 1 to 15.

17. A process for controlling a motor vehicle air conditioning system (1) having a fan (5), the motor vehicle air conditioning system (1) having a device (12) for controlling an air flow which has an air conduction housing (2) with at least one air duct (3) for supplying fresh air and at least one air duct (4) for recirculation air mode which can be joined together and form a joint air duct (10), at least one joint damper (9) for controlling an opening (3') in the air duct (3) for supplying fresh air and for controlling an opening (4') in the air duct (4) for air recirculation mode is provided,
**characterised in that**
when the air flow through the fan (5) is too great, a damper (9 and/or 11) is at least partially closed such that the air flow flowing through the fan (5) is reduced.

18. A process in accordance with claim 17,
**characterised in that**
control is carried out dependent on the spring force of a spring which is connected to the damper (11).

19. A process in accordance with claim 17,
**characterised in that**
control is carried out dependent on sensor-measured values.

20. A process in accordance with one of claims 17 to 19,
**characterised in that**
control comprises an automatic reduction by degrees of the fan power when the air flow through the fan (5) is too great.

## Revendications

1. Dispositif pour la régulation d'un débit volumétrique d'air dans une installation de climatisation d'un véhicule automobile qui comporte un boitier de guidage d'air (2) avec au moins un conduit d'air (3) pour l'amenée d'air frais et au moins un conduit d'air (4) pour le fonctionnement avec circulation d'air, qui sont réunis et qui forment un conduit d'air commun (10), un dispositif (12) étant prévu pour la réduction du débit volumétrique d'air, **caractérisé en ce qu'**il est prévu au moins un volet commun (9) pour le réglage d'une ouverture (3') du conduit d'air (3) pour l'amenée d'air frais et pour le réglage d'une ouverture (4') du conduit d'air (4) pour le fonctionnement avec circulation d'air, ce volet (9) faisant partie du dispositif (12) pour la réduction du débit volumétrique d'air.

2. Dispositif selon la revendication 1, **caractérisé en ce que** le dispositif pour la réduction du débit volumétrique d'air est constitué par un volet (9 et/ou 11).

3. Dispositif selon la revendication 2, **caractérisé en ce que** le volet (11) est prévu pour réduire la section transversale du conduit d'air commun (10).

4. Dispositif selon la revendication 2 ou 3, **caractérisé en ce que** le volet (11) est disposé devant le ventilateur (5).

5. Dispositif selon l'une quelconque des revendications 2 à 4, **caractérisé en ce que** le volet (11) comporte un ressort.

6. Dispositif selon l'une quelconque des revendications 2 à 5, **caractérisé en ce que**, dans l'état de déviation maximale, le volet (11) recouvre à peu près la moitié de la section transversale du conduit d'air commun (10).

7. Dispositif selon l'une quelconque des revendications 2 à 6, **caractérisé en ce que** le conduit d'air (3) pour l'amenée d'air frais est disposé perpendiculairement ou à peu près perpendiculairement au volet (11) lorsque le volet (11) se trouve dans l'état de déviation maximale.

8. Dispositif selon l'une quelconque des revendications 2 à 7, **caractérisé en ce que** le volet (11) pivote sur un angle de moins de 90° au maximum.

9. Dispositif selon l'une quelconque des revendications 2 à 8, **caractérisé en ce que**, à l'état de repos, le volet (11) est disposé selon un angle supérieur à 0° par rapport à la paroi du conduit d'air commun (10).

10. Dispositif selon l'une quelconque des revendications 2 à 9, **caractérisé en ce que** le volet (11) comporte un dispositif de réglage asservi (13).

11. Dispositif selon la revendication 10, **caractérisé en ce que** la régulation du dispositif de réglage (13) comprend au moins un capteur (16).

12. Dispositif selon la revendication 11, **caractérisé en ce que** le capteur (16) contrôle la vitesse de marche, la position des fenêtre/du toit amovible, le débit volumétrique d'air, la vitesse d'écoulement de l'air devant ou directement après le ventilateur (5), la pression de l'air dans l'orifice d'entrée d'air, la vitesse de rotation du moteur du ventilateur et/ou la température du moteur du ventilateur et le volet (11) est réglé en fonction de cela.

13. Dispositif selon l'une quelconque des revendications précédentes, **caractérisé en ce qu'**il est prévu au moins un capteur (16) qui détermine des valeurs de mesure qui se rapportent au flux s'écoulant dans le moteur du ventilateur (6).

14. Dispositif selon la revendication 13, **caractérisé en ce que** le capteur (16) contrôle la vitesse de marche, la position des fenêtre/du toit amovible, le débit volumétrique d'air, la vitesse d'écoulement de l'air devant ou directement après le ventilateur (5), la pression de l'air dans l'orifice d'entrée d'air, la vitesse de rotation du moteur du ventilateur et/ou la température du moteur du ventilateur et le volet (9) est réglé en fonction de cela.

15. Dispositif selon la revendication 14, **caractérisé en ce que** le capteur (16) est relié à un volet à ailettes (17) qui est disposé dans le conduit d'air (3) ou dans le conduit d'air commun (10).

16. Installation de climatisation d'un véhicule automobile, **caractérisée par** un dispositif (12) selon l'une quelconque des revendications 1 à 15.

17. Procédé pour la régulation d'une installation de climatisation d'un véhicule automobile (1) avec un ventilateur (5), l'installation de climatisation d'un véhicule automobile (1) comportant un dispositif (12) pour la régulation d'un débit volumétrique d'air qui comporte un boitier de guidage d'air (2) avec au moins un conduit d'air (3) pour l'amenée d'air frais et au moins un conduit d'air (4) pour le fonctionnement avec circulation d'air, qui sont réunis et qui forment un conduit d'air commun (10), au moins un volet commun (9) étant prévu pour le réglage d'une ouverture (3') du conduit d'air (3) pour l'amenée d'air frais et pour le réglage d'une ouverture (4') du conduit d'air (4), **caractérisé en ce qu'**un volet (9 et/ou 11) est fermé au moins partiellement par le ventilateur (5) en cas de débit volumétrique d'air trop important, de sorte que le débit volumétrique d'air s'écoulant à travers le ventilateur (5) est réduit.

18. Procédé selon la revendication 17, **caractérisé en ce que** la régulation se fait en fonction de la force de ressort d'un ressort qui est relié au volet (11).

19. Procédé selon la revendication 17, **caractérisé en ce que** la régulation se fait en fonction de valeurs de mesure du capteur.

20. Procédé selon l'une quelconque des revendications 17 à 19, **caractérisé en ce que** la régulation comporte une réduction par paliers de la puissance du ventilateur lorsque le débit volumétrique d'air s'écoulant à travers le ventilateur (5) est trop important.
